# Europäisches Patentamt

## European Patent Office

### Office européen des brevets

(11) Veröffentlichungsnummer: **0 042 599**
A2

(12) **EUROPÄISCHE PATENTANMELDUNG**

(21) Anmeldenummer: 81104724.0

(22) Anmeldetag: 19.06.81

(51) Int. Cl.³: **G 06 K 19/04**

(30) Priorität: 21.06.80 DE 3023265

(43) Veröffentlichungstag der Anmeldung:
30.12.81 Patentblatt 81/52

(84) Benannte Vertragsstaaten:
AT BE CH FR GB IT LI NL SE

(71) Anmelder: International Standard Electric Corporation
320 Park Avenue
New York New York 10022(US)

(72) Erfinder: Rosenbaum, Horst
Heinrich-Wieland-Allee 60
D-7530 Pforzheim(DE)

(74) Vertreter: Thul, Leo, Dipl.-Phys.
Kurze Strasse 8 Postfach 300 929
D-7000 Stuttgart 30(DE)

(54) Aufzeichnungsträger mit visuell und maschinell lesbarer Information.

(57) Eine Programmzeitschrift enthält aus der Zeitschrift abtrennbare Aufzeichnungsträgerteil,e insbesondere in Streifenform. Diese enthalten in Datenblöcken die Daten zu den in der Programmzeischrift abgedruckten Programmbeiträgen, die zum Einspeichern in eine Programmiereinrichtung zum selbsttätigen Inbetriebsetzen eines Empfängers in Abhängigkeit vom Benutzer ausgesuchter Programmbeiträge erforderlich sind, und außerdem ein Markierfeld für die individuelle Programmauswahl und jeweils eine vom Benutzer lesbare Zuordnungskennzeichnung. Dadurch ist eine einfache Übertragung der maschinell lesbaren Daten der markierten Daten in die Programmiereinrichtung möglich.

Fig.1

EP 0 042 599 A2

Dipl.-Phys. Leo Thul
Postfach 300 929, Kurze Str. 8
D-7000 Stuttgart 30, Deutschland

## Aufzeichnungsträger mit visuell und maschinell lesbarer Information

Die Erfindung betrifft einen Aufzeichnungsträger der im Oberbegriff des Anspruches 1 angegebenen Art.

Eine Zeitung oder Zeitschrift mit einem Rundfunk- und/ oder Fernsehprogramm stellt für einen Benutzer bereits einen Aufzeichnungsträger mit einer visuell lesbaren Aufzeichnung dieses Programmes dar. Viele Rundfunk- und Fernsehteilnehmer treffen nach diesem Programm bereits eine Vorauswahl der von den Sendern angebotenen Programmbeiträgen, die sie in der kommenden Zeit, beispielsweise der kommenden Programmwoche, hören oder sehen wollen. Sie nehmen diese Vorauswahl dadurch vor, daß sie die ausgewählten Programmbeiträge in der das Programm enthaltenden Zeitung oder Zeitschrift markieren. Zur Ausführung des so vorgewählten Programmes ist jedoch der Benutzer gezwungen, dauernd das vorausgewählte Programm in der Zeitschrift und die Zeit zu beobachten.

Ein anderer Weg, eine derartige Vorauswahl zu treffen, ist beispielsweise aus der Zeitschrift "Funk-Technik" 1973, Nr. 17, Seite 620 bekannt. Danach kann im Programmspeicher einer elektronischen Programmschalt-Einrichtung der Wochentag, die Stunde und die Minute und der Ein- oder Ausschaltbefehl für den im Empfangsgerät eingestellten Kanal oder für ein Empfangsgerät gespeichert werden. Die Einspeicherung erfolgt anstelle einer Markierung der ausgewählten Programmdarbietungen in der Zeitschrift durch Eintasten

11. Juni 1980
lr/mü

./.

der erforderlichen Daten in eine Tastatur der Programmiereinrichtung. Diese Art der Programmierung der ausgewählten Programmbeiträge erfordert jedoch einen hohen Programmieraufwand, der insbesondere für den im Programmieren meist ungeübten Rundfunk- und Fernsehteilnehmer unzumutbar ist.

Aus der Zeitschrift "Funkschau" 1980, Heft 1o, Seite 69 ist es bekannt, Zeitschriften oder Lebensmittelpackungen als Aufzeichnungsträger zu verwenden und auf diesem Aufzeichnungsträger eine Information in einer maschinell lesbaren Strichcodeschrift aufzubringen und gleichzeitig diese Information visuell lesbar, d.h. für den Betrachter oder Benutzer verständlich lesbar neben der Strichcodeschrift anzubringen. Die Information der Strichcodeschrift kann mit einer Leseeinrichtung gelesen und einer Auswerteeinrichtung zugeführt werden. Auf diese Weise wird eine Eingabe der Information über eine Tastatur in die Auswerteeinrichtung umgangen.

Hiervon ausgehend liegt der Erfindung die Aufgabe zugrunde, einen Aufzeichnungsträger der eingangs angegebenen Art so auszubilden, daß der Benutzer ohne wesentliche Programmierarbeit die von ihm ausgewählten Programmdarbietungen eines auf dem Aufzeichnungsträger aufgezeichneten Rundfunk- und/oder Fernsehprogrammes in einen Programmspeicher einer Programmiereinrichtung eines Empfangsgerätes einspeichern kann.

Diese Aufgabe wird gemäß der Erfindung bei einem Aufzeichnungsträger der im Oberbegriff des Anspruches 1 angegebenen Art durch die im kennzeichnenden Teil dieses Anspruches angegebenen technischen Merkmale gelöst.

./.

- 3 -                                    0042599

Die Erfindung weist insbesondere den Vorteil auf, daß der Benutzer des Programmträgers den maschinell lesbaren Teil des Programmträgers nach dem Markieren der ausgewählten Programmbeiträge in einfacher Weise abtrennen und zur Einspeicherung in eine Programmiereinrichtung für ein Empfangsgerät nur einer dafür vorgesehenen Leseeinrichtung zuführen muß. Ein Übertragungsfehler durch eine falsche Tastatureingabe ist damit ausgeschlossen.

Die Unteransprüche kennzeichnen vorteilhafte Ausgestaltungen der Erfindung.

Die Erfindung wird nachfolgend anhand zweier bevorzugter Ausführungsbeispiele näher erläutert. In der zugehörigen Zeichnung zeigen

Figur 1 eine aufgeschlagene Programmzeitschrift, deren aufgeschlagene Blätter abtrennbare Randstreifen aufweisen,

Figur 2 ein Stück einer aufgeschlagenen Programmzeitschrift mit herausgeklapptem, abtrennbarem Datenträgerteil der Zeitschrift.

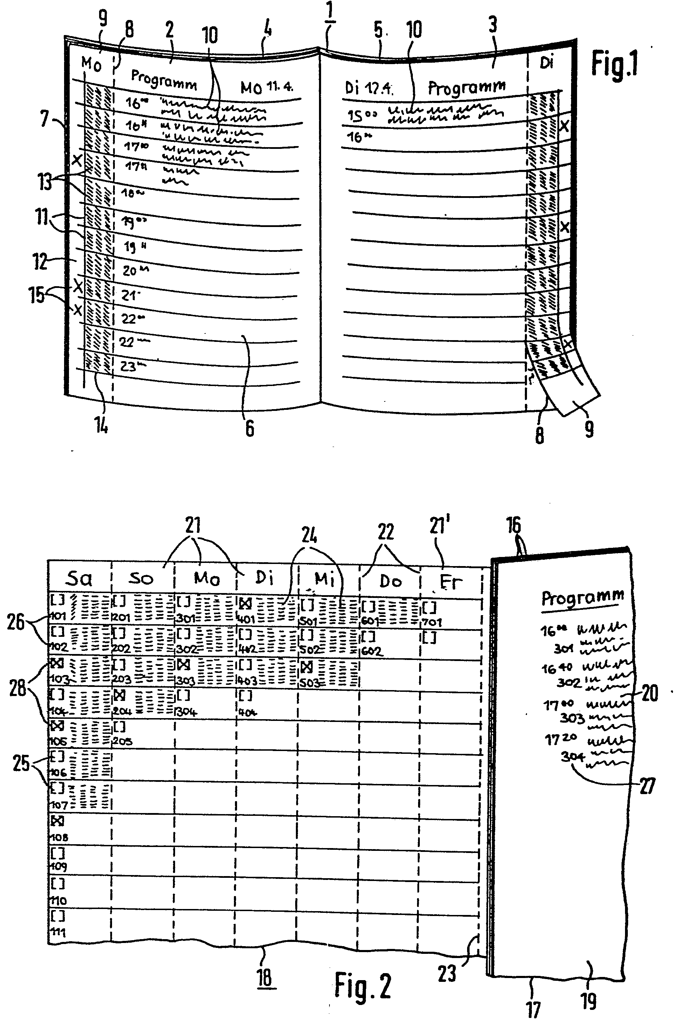

In Figur 1 ist eine Programmzeitschrift 1 für ein Rundfunk- und Fernsehprogramm, beispielsweise einer Programmwoche, in aufgeschlagenem Zustand dargestellt. Die beiden aufgeschlagenen Seiten 2 und 3 der offenliegenden Blätter 4 und 5 der Zeitschrift enthalten jede in visuell lesbarem Text 6 das angebotene Sendeprogramm von Rundfunk- und Fernsehsendern für einen bestimmten Tag; die Seite 2 beispielsweise für einen Montag eines bestimmten Datums, die Seite 3 beispielsweise für einen Dienstag eines bestimmten Datums. Gegen den Außenrand 7 hin weisen die bei-

                                                    ./.

den Blätter 4 und 5 eine Perforation 8 auf, durch die am Außenrand der Blätter 4 und 5 ein Streifen 9 als abtrennbares Teil dieser Blätter entsteht. Der Streifen 9 des Blattes 5 ist in der Zeichnung teilweise abgetrennt dargestellt.

Die einzelnen Programmdarbietungen 1o des auf den Seiten 2 und 3 abgedruckten Programmes sind auf diesen Seiten jeweils in fortlaufend untereinander liegender Reihenfolge angeordnet. Jedem Programmbeitrag ist auf dem Streifen 9 ein Feld 11 zugeordnet, das ein Markierungsfeld 12 und einen maschinell lesbaren Datenblock 13 aufweist. Die Zuordnung erfolgt in dem dargestellten Ausführungsbeispiel durch eine bis in den Streifen durchgezogene Trennungslinie 14, die jeweils zwei benachbarte Programmbeiträge voneinander trennt und so die visuell lesbare Zuordnungsinformation zwischen den Datenblöcken 13 und den im Textteil 6 enthaltenen visuell lesbaren Informationen der einzelnen Programmdarbietungen 1o bildet.

Der Benutzer der Zeitschrift kann aus dem angebotenen Programm die Programmbeiträge 1o aussuchen, die er zu sehen oder zu hören wünscht und im zugehörigen Markierungsfeld 12, beispielsweise durch ein Kreuz 15, kennzeichnen. Nach einer solchen Kennzeichnung kann er die mit den Markierungen versehenen Streifen 9 an der Perforation 8 von den Blättern 4 und 5 der Zeitschrift 1 abtrennen und über eine Leseeinrichtung einer Programmiereinrichtung eines Empfangsgerätes führen, das die Daten der Streifen 9 maschinell liest und zur automatischen Programmwahl in einen Speicher der Programmiereinrichtung eingibt. Die Datenblöcke 13 der Streifen 9 enthalten die für die automatische Programmwahl erforderlichen Daten in einer für die Leseeinrichtung geeigneten Gestalt und Anordnung.

./.

In Figur 2 ist der obere, linke Teil der Blätter 16 einer anderen aufgeschlagenen Programmzeitschrift 17 mit dem oberen Teil eines blattförmigen, aus der Zeitschrift ausklappbaren Aufzeichnungsträgerteils 18 dargestellt. Dieses ausklappbare Blatt 18 bildet zusammen mit den Blättern 16, deren Seiten 19 das Rundfunk- und/oder Fernsehprogramm 2o in Text- oder Bildform enthalten, einen erfindungsgemäßen Aufzeichnungsträger. Das ausklappbare Blatt 18 besteht aus mehreren nebeneinander angeordneten Streifen 21, die an Perforationen 22 voneinander trennbar sind. Der zunächst der Zeitschrift angeordnete Streifen 21' ist an einer Perforation 23 von der Zeitschrift 17 trennbar. Jedem Tag des in der Zeitschrift abgedruckten Rundfunk- und/oder Fernsehprogrammes ist beispielsweise ein Streifen 21 des herausklappbaren Blattes 18 zugeordnet. Die einzelnen Streifen enthalten mehrere Felder mit je einem maschinell lesbaren Datenblock 24, einem Markierungsfeld 25 und einer visuell, d.h. durch den Benutzer lesbaren Zuordnungsinformation 26. Im dargestellten Ausführungsbeispiel ist die Zuordnungsinformation eine Nummer. Die gleiche Nummer ist beim Text des zugehörigen Programmbeitrages auf der entsprechenden Seite 19 der Programmzeitschrift als Kennzeichen 27 des Programmbeitrages abgedruckt.

Im dargestellten Ausführungsbeispiel markiert der Benutzer der Zeitschrift die von ihm ausgesuchten Programmbeiträge, z.B. durch ein Kreuzchen 28 im entsprechenden Markierungsfeld 25 auf dem ausklappbaren Blatt und trennt anschließend die einzelnen Streifen 21 von der Zeitschrift 17 ab, um sie einer Leseeinrichtung einer Programmiereinrichtung für eine automatische Programmwahl zuzuführen.

./.

Die maschinell lesbaren Zeichen der Datenblöcke können bei einer entsprechenden Zeichenwahl im gleichen Druckvorgang hergestellt werden, wie der visuell lesbare Textteil der Zeitung oder Zeitschrift. Bei anderen Ausführungsbeispielen können die Zeichen der Datenblöcke jedoch auch in die abtrennbaren Teile des Aufzeichnungsträgers gestanzt oder eingeprägt sein. Schließlich sind auch Aufzeichnungsträger vorgesehen, bei denen auf die abtrennbaren Teile eine dünne Trägerschicht aufgebracht ist, in die die Zeichen der Datenblöcke optisch oder magnetisch lesbar eingeschrieben sind.

1 Blatt Zeichnungen

Patentansprüche

1. Aufzeichnungsträger mit visuell und maschinell lesbarer
   Information, dadurch gekennzeichnet, daß er mindestens
   ein abtrennbares Teil (9) enthält, daß das abtrennbare
   Teil mehrere maschinell lesbare Datenblöcke (13) und jeweils die Datenblöcke mit den zugeordneten visuell lesbaren Aufzeichnungen des Aufzeichnungsträgers verknüpfende
   visuell lesbare Zuordnungs-Informationen (14) enthalten
   und daß jeder Datenblock ein Markierungsfeld (12) aufweist.

2. Aufzeichnungsträger nach Anspruch 1, dadurch gekennzeichnet, daß er Bestandteil einer Zeitung oder Zeitschrift
   (1, 17) ist, in der ein Rundfunk- und Fernsehprogramm (2o)
   abgedruckt ist.

3. Aufzeichnungsträger nach Anspruch 2, dadurch gekennzeichnet, daß er ein Blatt (4) der Zeitung oder Zeitschrift
   (1) ist und daß der abtrennbare Teil (9) des Aufzeichnungsträgers ein am Außenrand (7) des Blattes (4) angeordneter
   Streifen ist.

4. Aufzeichnungsträger nach Anspruch 2, dadurch gekennzeichnet, daß er ein aus der Zeitung oder Zeitschrift (17) ausklappbares Blatt (18) ist.

5. Aufzeichnungsträger nach Anspruch 4, dadurch gekennzeichnet, daß das ausklappbare Blatt (18) von der Zeitung oder
   Zeitschrift (17) abtrennbar ist.

11. Juni 1980                                        ./.
lr/mü

6. Aufzeichnungsträger nach einem der Ansprüche 1 bis 5, dadurch gekennzeichnet, daß die maschinell lesbaren Datenblöcke (13) aufgedruckt sind.

7. Aufzeichnungsträger nach Anspruch 6, dadurch gekennzeichnet, daß die maschinell lesbaren Datenblöcke (13) aus dem gleichen Druckerfarbstoff bestehen wie die visuell lesbaren Textinformationen (6).

8. Aufzeichnungsträger nach einem der Ansprüche 1 bis 5, dadurch gekennzeichnet, daß die maschinell lesbaren Datenblöcke (24) in die abtrennbaren Teile (21) gestanzt oder geprägt sind.

9. Aufzeichnungsträger nach einem der Ansprüche 1 bis 5, dadurch gekennzeichnet, daß die abtrennbaren Teile (21) wenigstens im örtlichen Bereich der Datenblöcke (24) eine Trägerschicht enthalten, in die die Datenblöcke optisch oder magnetisch lesbar eingeschrieben sind.

**Fig.1**

Mo | Programm | MO 11. 4. | Di 12.4. | Programm | Di

16⁰⁰
16³⁰
17¹⁰
17⁴⁵
18⁰⁰
19⁰⁰
19⁴⁵
20⁰⁰
21°
22⁰⁰
22⁴⁵
23³⁰

15⁰⁰
16³⁰

**Fig.2**

| Sa | So | Mo | Di | Mi | Do | Fr |
|---|---|---|---|---|---|---|
| [] 101 | [] 201 | [] 301 | [X] 401 | [] 501 | [] 601 | [] 701 |
| 102 | 202 | [] 302 | [] 402 | [] 502 | 602 | [] |
| [X] 103 | 203 | [X] 303 | [] 403 | [X] 503 | | |
| [] 104 | [X] 204 | [] 304 | [] 404 | | | |
| [X] 105 | [] 205 | | | | | |
| [] 106 | | | | | | |
| [] 107 | | | | | | |
| [X] 108 | | | | | | |
| [] 109 | | | | | | |
| [] 110 | | | | | | |
| [] 111 | | | | | | |

**Programm**

16⁰⁰ 301
16⁴⁰ 302
17⁰⁰ 303
17²⁰ 304

H. Rosenbaum -1
27. 6. 80